(19) Europäisches Patentamt
European Patent Office
Office européen des brevets

(11) **EP 2 155 619 B1**

(12) **EUROPÄISCHE PATENTSCHRIFT**

(45) Veröffentlichungstag und Bekanntmachung des Hinweises auf die Patenterteilung:
**17.12.2014   Patentblatt 2014/51**

(51) Int Cl.:
***C03C 10/04*** *(2006.01)*   ***B32B 17/10*** *(2006.01)*

(21) Anmeldenummer: **08758746.5**

(22) Anmeldetag: **24.05.2008**

(86) Internationale Anmeldenummer:
**PCT/EP2008/004155**

(87) Internationale Veröffentlichungsnummer:
**WO 2008/145317 (04.12.2008 Gazette 2008/49)**

(54) **GLASKERAMISCHES PANZERMATERIAL**

GLASS CERAMIC ARMOR MATERIAL

MATÉRIAU DE BLINDAGE EN VITROCÉRAMIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **01.06.2007   DE 102007025893**

(43) Veröffentlichungstag der Anmeldung:
**24.02.2010   Patentblatt 2010/08**

(73) Patentinhaber: **Schott AG**
**55122 Mainz (DE)**

(72) Erfinder:
• **SIEBERS, Friedrich**
**55283 Nierstein (DE)**
• **LEMKE, Hans-Jürgen**
**65366 Geisenheim (DE)**
• **SCHAUPERT, Kurt**
**65719 Hofheim (DE)**
• **ZACHAU, Thilo**
**64625 Bensheim (DE)**

(74) Vertreter: **Blumbach Zinngrebe**
**Patentanwälte**
**Alexandrastrasse 5**
**65187 Wiesbaden (DE)**

(56) Entgegenhaltungen:
**EP-A- 1 146 018      EP-A- 1 170 264**
**EP-A- 1 291 328      WO-A-03/068501**
**DE-A1-102005 019 247   GB-A- 2 284 655**

**Beschreibung**

Die Erfindung betrifft allgemein Panzerungen, insbesondere Panzerungen gegen hochdynamische Impulsbelastungen auf Basis von Glaskeramik-Materialien.

Ein Schutz vor Projektilen aus Beschuss oder Splitterwirkung kann durch metallische oder keramische Werkstoffe bewirkt werden. Die Form, Aufbau und kinetische Energie der Projektile, vor denen ein Schutz erfolgen soll, bestimmen dabei die Auswahl der Schutzwerkstoffe. Panzerungen sind oft als Schichtverbund mit einem harten Material und einem Träger oder Backing aufgebaut. Keramische Komponenten werden hierbei oft mit Faserverbunden hinterfangen, um durch den keramischen Werkstoff das Projektil zu zerstören oder zumindest zu deformieren und durch den Faserverbund die Projektilteile oder Keramiksplitter aufzufangen, die gegebenenfalls aufgrund der Wechselwirkung zwischen Projektil und Bewehrungsmaterial entstehen.

Als Träger kommen beispielsweise Aramidfaser-Gewebe, Stahlnetze oder auch Stahlplatten zum Einsatz. Solche Panzerungen dienen beispielsweise dem Personenschutz, etwa für eine kugelsichere Weste oder zum Schutz von Objekten, wie Fahrzeugen und Fluggeräten. In allen diesen Einsatzgebieten ist es wesentlich, daß die Panzerungen bei hoher Festigkeit nicht zu schwer werden.

Bei den vielfach verwendeten keramischen Materialien für antiballistische Panzerungen, beziehungsweise Panzerungen gegen hochdynamische Impulsbelastungen, die beim Auftreffen von Projektilen auftreten, besteht im allgemeinen das Problem, daß Keramik noch eine gewisse Porosität bzw. Knoten oder andere Inhomogenitäten aufweist. Die Inhomogenitäten können dabei Schwachstellen darstellen, welche die Fortpflanzung von Rissen beim Auftreffen eines Geschosses begünstigen.

Insbesondere bei keramischen Komposit-Materialien ergibt sich weiterhin auch das Problem, daß die keramische Matrix die weitere Phase, wie etwa eingebettete Fasern vielfach nicht perfekt umschließt, da das keramische Material beim Sintern nicht fließen kann. Gerade bei keramischen Materialien können daher erhöhte Porositäten und eingeschlossene Knoten auftreten. Zudem weisen viele für Panzerungen geeignete keramische Materialien ein hohes spezifisches Gewicht auf. So beträgt die Dichte von Aluminiumoxid-Keramik etwa 4 g/cm$^3$.

Aus der US 4,473,653 A ist eine Panzerung mit einer Lithium-Aluminosilikat-Glaskeramik und deren Herstellung bekannt. Es ist weiterhin bekannt, Fluggeräte, wie etwa Hubschrauber durch Borcarbid-haltige Panzerungen zu schützen. Im allgemeinen wird dazu eine Keramik eingesetzt, die Aluminiumoxid ($Al_2O_3$), Siliziumcarbid (SiC), Borcarbid ($B_4C$) und Titanborid ($TiB_2$) enthält. Diese Materialien sind zwar relativ leicht, allerdings aufgrund der aufwändigen Herstellung auch sehr teuer. Panzerungen aus keramischem Komposit-Material sind außerdem aus der US 5,763,813 A bekannt.

In allen Anwendungen ist ein niedriges Flächengewicht, also eine geringe Masse der Bewehrung probeschusshemmend geschützter Fläche für eine bestimmte Schutzwirkung eine Zielgröße. Der größtmögliche Schutz soll mit möglichst geringer Masse erzielt werden, da das zu schützende Fahrzeug oder die Person diese Masse zusätzlich zur sonstigen Ausrüstung transportieren muss. Nach dem Stand der Technik werden daher bei Anwendungen, bei denen keine Transparenz erforderlich ist, Bewehrungskomponenten aus Stahl durch solche aus Keramik-Polymerfaser-Verbunden ersetzt. Als Keramik wird unter anderem solche auf Basis von Aluminiumoxid, Siliziumcarbid oder Borcarbid eingesetzt.

Aus der EP 0390773 BI ist eine Schutzeinrichtung aus einem Laminat aus Glaskeramik mit einer energieabsorbierenden Rückseitenbeschichtung bekannt, wobei die Glaskeramik eine wesentlich geringere Härte als Aluminiumoxid aufweist. Die Schutzeinrichtung erleidet dabei einen Mehrfachbruch beim Einschlag eines Projektils. Die Glaskeramik wird durch kontrollierte Kristallisation eines Ausgangsglases durch eine Temperaturbehandlung hergestellt. Es werden Beispiele von Ausgangsgläsern aus verschiedenen Glaskeramik-Grundsystemen genannt. Die bei der Temperaturbehandlung erzielte Strukturänderung soll dahingehend stattfinden, dass bei einer Kristallisationskernbildungstemperatur Kristallisationskerne, beziehungsweise Keime ausgeschieden werden, an denen sich bei einer Temperatur unterhalb der maximalen Kristallbildungsgeschwindigkeit eine hohe Dichte von Feinkornkristallen bildet, die größer als die Feinkornkristalldichte ist, die bei maximaler Kristallbildungsgeschwindigkeit entstehen würde. Das als Beispiel 2 aufgeführte Grundglas einer $Li_2O$-$Al_2O_3$-$SiO_2$-Glaskeramik wird so keramisiert, dass sich eine Hochquarzmischkristall-Glaskeramik ausbildet. Bei einer Projektileinwirkung soll eine konische Bruchstruktur erzielt werden. Ein Problem liegt bei diesem, wie auch bei anderen harten Materialien darin, daß diese Materialien zwar vielfach einen einzelnen Beschuß gut abwehren können, dabei jedoch oft derart zersplittern, daß sie keinen wirksamen Schutz mehr bei wiederholtem Beschuß bieten.

Für Anwendungen, bei denen Transparenz erforderlich ist, werden Laminate aus Glas und Kunststoff, teilweise auch einkristalline oder transparente keramische Werkstoffe eingesetzt. Ein Problem besteht dabei darin, daß diese transparenten Panzermaterialien nur wenig wirkungsvoll sind. Um einen wirkungsvollen Schutz zu gewährleisten, müssen diese Panzermaterialien jedoch sehr dick sein. Damit gehen unter anderem Gewichtsprobleme einher.

Neben dem Schutz vor einem eindringenden Projektil ist Ziel einer Schutzeinrichtung auch, vor gegebenenfalls weiteren in nahem Umkreis des ersten Projektils zeitlich versetzt einwirkenden Projektilen zu schützen (Mehrfachbeschuss). Keramiken oder Glaskeramiken nach dem Stand der Technik weisen allgemein ein Bruchverhalten auf, das ein großflächiges Bruchbild und kleinteilige Zersplitterung bewirkt. Daher wird eine Segmentierung von Keramik-Komponenten vorgesehen, wie sie beispielhaft in DE3426457 dargestellt ist. Eine solche Segmentierung führt jedoch zu Schwachstellen im Randbereich der Einzelsegmente und zu erhöhtem Bearbeitungsaufwand.

Alternativ schlägt die US6389594 vor, die Keramik-Komponente mit einer Druckvorspannung durch eine äußere Umhüllung zu versehen. Die Schutzwirkung einer Schutzeinrichtung hängt von einer gleichmäßigen Qualität des Materials ohne innere und äußere Fehlstellen ab . Eine Prüfung von Keramikbauteilen auf innere Fehlstellen ist in vielen Fällen dadurch erschwert, dass das Material optisch nicht transparent ist.

Glaskeramik weist in vielen Fällen demgegenüber den Vorteil auf, dass das Ausgangsglas vor der Wärmebehandlung transparent ist und daher optisch leicht auf Fehlstellen (Gispen, Schlieren, Einschlüsse, Kratzer) untersucht werden kann. Weiterhin ist Glaskeramik ein Werkstoff, der durch das Herstellungsverfahren bedingt keine Porosität aufweist, während Keramik aus Partikeln durch ein Sinterverfahren hergestellt wird und immer eine Restporosität aufweist. Es bedarf aufwändiger Prozessschritte, wie beispielsweise einer Infiltration mit geschmolzenem Glas, um diese Restporosität zu schließen.

Aus der GB 2 284 655 A ist eine Glaskeramik-Panzerung bekannt.

Es ist Aufgabe der Erfindung, eine Glaskeramik-Komponente für eine Schutzeinrichtung gegen ballistische Einwirkungen zu schaffen, die bei einfacher Herstellung eine verbesserte Schutzwirkung vor Mehrfachbeschuss bewirkt.

Diese Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Überraschenderweise wurde gefunden, dass diese Aufgabe dadurch gelöst wird, dass die Glaskeramik-Komponente aus einem Ausgangsglas erhalten wird, das folgende Komponenten enthält:

50 bis 70 Gewichtsprozent $SiO_2$,
15 bis 25 Gewichtsprozent $Al_2O_3$,
0,5 bis 5 Gewichtsprozent $ZrO_2$,
0,1 bis 10 Gewichtsprozent $Li_2O$,
1 bis 5 Gewichtsprozent $TiO_2$. Auch die Glaskeramik enthält selbstverständlich diese Komponenten.

Vorzugsweise sind ferner eine oder mehrere der Komponenten BaO, CaO, $K_2O$, MgO, $Na_2O$, $P_2O_5$, $SnO_2$, $As_2O_3$, $Sb_2O_3$, $V_2O_5$, CoO, NiO, $Fe_2O_3$, jeweils zwischen 0 und 5 Gewichtsprozent als Zusatz enthalten.

Zur Herstellung der erfindungsgemäßen Glaskeramik-Komponente wird das Ausgangsglas einer Temperaturbehandlung bei Temperaturen über der Temperatur der maximalen Ausscheidungsgeschwindigkeit des Hochquarzmischkristalles unterzogen, wobei als Bestandteil der Hauptkristallphase der Glaskeramik Keatit-Mischkristall, beziehungsweise Spodumen im Zusammensetzungsbereich $LiAlSi_2O_6$ - $LiAlSi_4O_{10}$ erzeugt wird.

Vorzugsweise bildet die Keatit-Mischkristall-Phase den überwiegenden Volumenanteil der Kristallphase, beziehungsweise des kristallisierten Volumens und/oder des Gesamtvolumens. Insbesondere wird dabei bevorzugt, wenn die Keatit-Mischkistallphase mit einem Anteil zwischen 60 und 98 Volumenprozent ausgeschieden wird.

Aufgrund ihres geringen Gewichts eignet sich eine antiballistische Panzerung mit einer erfindungsgemäßen Glaskeramik-Komponente besonders auch als tragbare Personenschutz-Einrichtung. Gedacht ist hier unter anderem an Westen, auch sogar an Einrichtungen, bei denen Transparenz gewünscht oder gefordert ist, wie etwa Visiere oder Schilde.

Transparenz einer erfindungsgemäßen Glaskeramik-Komponente kann erzielt werden, indem die mittlere Kristallit-Größe durch Variation des Temperatur-Zeit-Regimes während der Keramisierung auf weniger als 0,2 Mikrometer, vorzugsweise weniger als 0,1 Mikrometer begrenzt wird. Die Zusammensetzung der Glaskeramik, beziehungsweise des Ausgangsglases wird vorzugsweise so gewählt, dass der Brechungsindex der Restglasphase nur um weniger als ±0,3 von dem Brechungsindex der Kristallphase abweicht. Hierdurch ist die Transmissionsminderung durch Lichtstreuung/Trübheit ausreichend gering, so dass das Material für praktische Anwendungen als transparenter Schutzwerkstoff genügt.

Insbesondere kann die Glaskeramik ein Gefüge aufweisen, welches nach dem Andrejev-Hopper-Modell transparent ist. Nach diesem Modell errechnet sich die Trübheit $\sigma_c$ aufgrund von Streuung gemäß der folgenden Beziehung :

$$\sigma_c = 2/3\, k^4 \theta^3 (n \cdot \Delta n)^2$$

In dieser Beziehung bezeichnet n den Kristallit-Brechungsindex und $\Delta n$ den Brechungsindex-Unterschied des Kristallits zur Restglasphase. Der Parameter k ist gegeben durch $k = 2\pi/\lambda$, wobei $\lambda$ die Wellenlänge des betrachteten Lichts darstellt. Der Parameter $\theta$ bezeichnet den mittleren Phasenabstand der beteiligten Phasen, nämlich der Restglasphase und der Kristallite und ist gegeben durch:

$$\Theta = (a + W/2) \cdot 10^{-3}$$

Dabei bezeichnet a den Kristallitradius und W den Kristallitabstand. Eine hinreichend kleine Streuung, um die Glaskeramik transparent zu machen, wird insbesondere mit einem mittleren Kristallradius kleiner 15 nm und einem Brechwert-Unterschied $\Delta n$ kleiner 0,3 erzielt.

In vorteilhafter Weiterbildung kann die Glaskeramik durch geeignete Wahl des Ausgangsglases und der Temperaturführung bei der Keramisierung auch transparent nach dem Rayleiqh-Gans-Modell hergestellt werden. Nach diesem Modell gilt für die Trübheit $\sigma_P$ aufgrund von Streuung:

$$\sigma_P = 2/3\, N \cdot V \cdot k^4 \cdot a^3 \cdot (n \cdot \Delta n)^2$$

Dabei bezeichnet V das Kristallitvolumen und N die Kristallitdichte. Die übrigen Symbole bezeichnen die gleichen Parameter wie in der Beziehung der Trübheit gemäß dem Andreev-Hopper-Modell. Nach dem Rayleiqh-Gans-Modell wird hinreichend geringe Trübung, beziehungsweise Transparenz für einen mittleren Kristallitradius a kleiner 30 nm und einem Brechwertunterschied $\Delta n$ der Kristallite zur Restglasphase von $\Delta n < 0,1$ erreicht. Es zeigt sich, daß auch eine solche Glaskeramik nicht nur transparent ist, sondern auch die Festigkeitsanforderungen bei Beschuß erfüllt.

Auch für Anwendungen, in denen eine Transparenz an sich nicht erforderlich ist, wie beispielsweise für schußsichere Westen, die mit erfindungsgemäßen Glaskeramik-Komponenten armiert sind, ist die Transparenz eine vorteilhafte Eigenschaft. Die Transparenz des erfindungsgemäßen Materials erlaubt es, die Glaskeramik auf mögliche im Volumen vorhandene, möglicherweise festigkeitsreduzierende Fehler, wie größere Blasen oder Einschlüsse zu untersuchen und fehlerbehaftete Komponenten auszusortieren.

Es ist weiterhin besonders zweckmäßig, plattenförmige Glaskeramik-Komponenten zu verwenden, so daß eine der Seiten der Platte einen großflächigen Schutz gegen Geschosse bietet. Die Platte muß aber nicht eben sein. So können neben ebenen Platten auch gewölbte Platten, oder Platten mit einer strukturierten Oberfläche hergestellt werden. Es stehen bedingt durch das Herstellungsverfahren allgemein im wesentlichen die gleichen Formgestaltungsmöglichkeiten wie bei der Herstellung von Glasscheiben zur Verfügung.

Um die Beschußfestigkeit einer erfindungsgemäßen antiballistischen Panzerung mit einer wie oben beschriebenen Glaskeramik-Komponente zu verbessern, ist es weiterhin günstig, die Glaskeramik-Komponente in Verbund mit einer oder mehreren weiteren Komponenten einzusetzen. Eine besonders beschußfeste Anordnung wird durch einen Verbund mit einem weiteren Panzerelement, beispielsweise durch ein Laminat der Glaskeramik-Komponente mit einem faserverstärkten Polymer erzielt. Für beschußfeste Verglasungen, wie etwa einem Visier oder einer Sichtscheibe, beispielsweise für ein gepanzertes Kraftfahrzeug kann auch ein Verbund mit einer durchsichtigen Kunststoffplatte oder -folie, beispielsweise aus Polycarbonat als Panzerung verwendet werden. Sowohl für die Verwendung als Visier, als auch als Sichtscheibe kann die Glaskeramik je nach Anwendung in Gestalt einer ebenen oder gewölbten Platte geformt sein.

Die Erfindung wird nachfolgend anhand von Ausführungsbeispielen und unter Bezugnahme auf die beigeschlossenen Figuren weiter erläutert. In den Figuren bezeichnen gleiche Bezugszeichen gleiche oder entsprechende Elemente. Es zeigen:

Fig. 1    ein Laminat einer Glaskeramik-Komponente mit einer faserverstärkten Kunststoffplatte,

Fig. 2    ein Visier mit einer gewölbten Glaskeramik-Komponente,

Fig. 3    eine kugelsichere Weste mit Glaskeramik-Armierung, und

Fig. 4    ein Diagramm der Transmission als Funktion der Wellenlänge für Glaskeramiken mit zwei unterschiedlichen Kristallitgrössen.

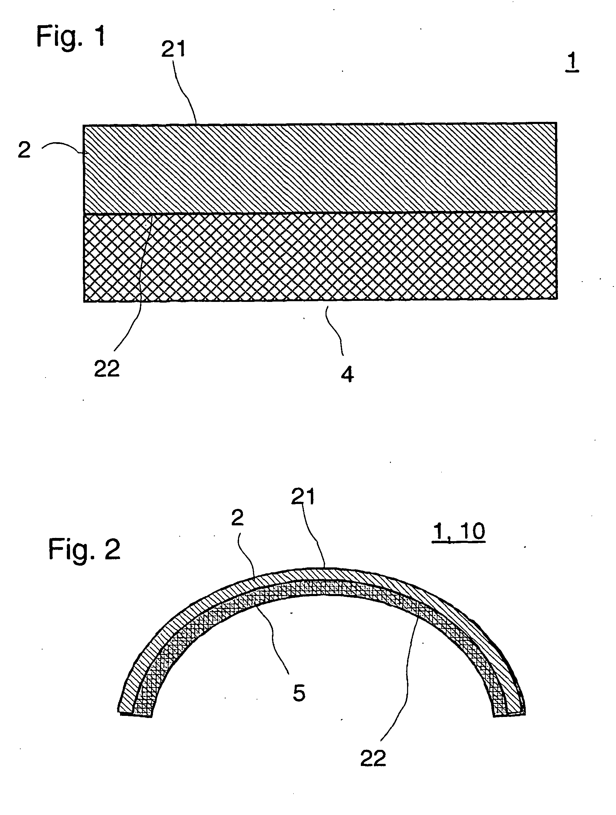

Fig. 1 zeigt in schematischem Querschnitt eine Panzerung 1. Die Panzerung 1 umfasst eine erfindungsgemäße Glaskeramik-Komponente in Gestalt einer Platte 2 mit Seiten 21, 22. Die Platte 2 mit ihrer Seite 22 auf eine faserverstärkte Kunststoffplatte 4 auflaminiert. Die Glaskeramik der Platte 2 ist eine Lithium-Aluminosilikat-Glaskeramik, die 50 bis 70 Gewichtsprozent $SiO_2$, 15 bis 25 Gewichtsprozent $Al_2O_3$, 0,5 bis 5 $ZrO_2$, 0,1 bis 10 Gewichtsprozent $Li_2O$, 1 bis 5 Gewichtsprozent $TiO_2$, sowie einen oder mehrere weitere der Bestandteile BaO, CaO, $K_2O$, MgO, $Na_2O$, $P_2O_5$, $SnO_2$,

$As_2O_3$, $Sb_2O_3$, $V_2O_5$, CoO, NiO, $Fe_2O_3$, jeweils zwischen 0 und 5 Gewichtsprozent.

Je nach Verwendungszweck bildet eine der Seiten 21, 22 die für ein Geschoss exponierte Seite. Es ist besonders bevorzugt, die Panzerung so einzusetzen, beziehungsweise einzubauen, daß die Seite 21 die exponierte Seite bildet. Mit anderen Worten ist es allgemein, ohne Beschränkung auf das in Fig. 1 gezeigte Beispiel vorteilhaft, wenn bei einem Verbund mit einem weiteren weicheren Panzerelement die Glaskeramik-Komponente in Einwirkungsrichtung vor dem weiteren Panzerelement angeordnet ist. Dies ist von Vorteil, da die Glaskeramik aufgrund ihrer Härte stark geschoßzerstörend wirkt. Verbleibende Geschoßteile oder Splitter können dann leicht vom dahinterliegenden weicheren Material aufgefangen werden. Selbstverständlich wird dabei aber nicht ausgeschlossen, daß auch in Einwirkungsrichtung vor der Glaskeramik eines oder mehrere weitere Panzerelemente angeordnet werden.

Im folgenden wird ein Ausführungsbeispiel erläutert, bei welchem die Beschussfestigkeit einer Panzerung, wie sie in Fig. 1 dargestellt ist, getestet und mit anderen Materialien verglichen wurde. Es wurde eine erfindungsgemäße plattenförmige Glaskeramik-Komponente mit der Hauptkristallphase Keatitmischkristall im Laminat mit einem faserverstärkten Polymer als Schutzeinrichtung im Vergleich zu anderen Komponenten gleicher,chemischer Zusammensetzung getestet. Der Test erfolgte durch Beschuß mit einem Hartkern-Projektil Kaliber 7.65 und der Auftreffgeschwindigkeit von 835 m/s.

Zum Vergleich wurde eine Glaskeramik mit der Hauptkristallphase Hochquarzmischkristall im Laminat mit einer faserverstärkten Polymer-Komponente auf ballistische Schutzwirkung geprüft. Außerdem wurde ein gleichartiges Laminat mit einer faserverstärkten Polymer-Komponente und eine Glaskomponente mit einem Glas gleicher Zusammensetzung überprüft.

Sowohl bei der Glas-Komponente, als auch bei der Glaskeramik-Komponente mit Hochquarzmischkristall als Hauptkristallphase führte ein auftreffendes Projektil zu einer feinkrümeligen Zerstörung mit einem Durchmesser von 8 cm und einer darumliegenden zerstörten Zone. In dieser Zone mit einem Durchmesser von 28 cm zeigen sich zahlreiche vom Einschlagsort des Projektils sternförmig ausgehende Radialrisse.

Die erfindungsgemäße Glaskeramik wies einen Anteil von 85 Volumenprozent Keatit-Mischkristall auf. Bei dieser Glaskeramik war das Bruchbild nur in einer Zone mit 4cm Durchmesser feinkrümelig. Bereiche außerhalb dieser Zone waren nur von einzelnen Rissen durchzogen. Die Schutzwirkung bleibt daher weitgehend unverändert erhalten.

Durch die erfindungsgemäße Komponente wird somit die Schutzwirkung gegen Mehrfachbeschuss stark verbessert. Gerade die ansonsten bei anderen Glaskeramiken oder Gläsern auftretende großflächige zerstörte Zone führt dazu, daß innerhalb dieser Zone ein weiters Projektil nur noch auf kleinere Scherben trifft. Diese bieten aber nur noch ungenügenden Schutz, insbesondere wenn die Scherben kleiner als die feinkrümelig zerstörte Zone sind. In diesem Fall kann selbst im günstigsten Fall eines mittigen Treffers auf eine Scherbe nicht mehr im selben Maße Energie des Geschosses durch Zerstäubung des Panzermaterials absorbiert werden.

Fig. 2 zeigt ein weiteres Ausführungsbeispiel, welches besonders vorteilhaft die Transparenz der erfindungsgemäßen Glaskeramik ausnutzt. Fig. 2 zeigt im Speziellen eine Panzerung 1 in Gestalt eines Visiers 10. Das Visier 10 umfasst eine Glaskeramik-Komponente in Gestalt einer gewölbten Platte. Diese ist mit.einer transparenten Kunststoffplatte 5 verbunden.

Auch die Kunststoffplatte 5 hat eine Funktion als Panzerelement. Ebenso wie die faserverstärkte Kunststoffplatte 4 bei dem in Fig. 1 gezeigten Beispiel verhindert die Kunststoffplatte 5 das Durchdringen von Splittern der Glaskeramik-Platte 2 und/oder eines auftreffenden Geschosses. Gleichfalls wie bei dem in Fig. 1 gezeigten Beispiel ist daher die Kunststoffplatte 5 in Einwirkungsrichtung hinter der Glaskeramik-Platte 2 angeordnet. Zudem wird, ebenso wie bei dem anhand von Fig. 1 beschrieben Beispiel das Lösen von Splittern des beschossenen Glaskeramik-Materials verhindert und das Glaskeramik-Material durch den Verbundpartner auch nach einem Beschuß zusammengehalten.

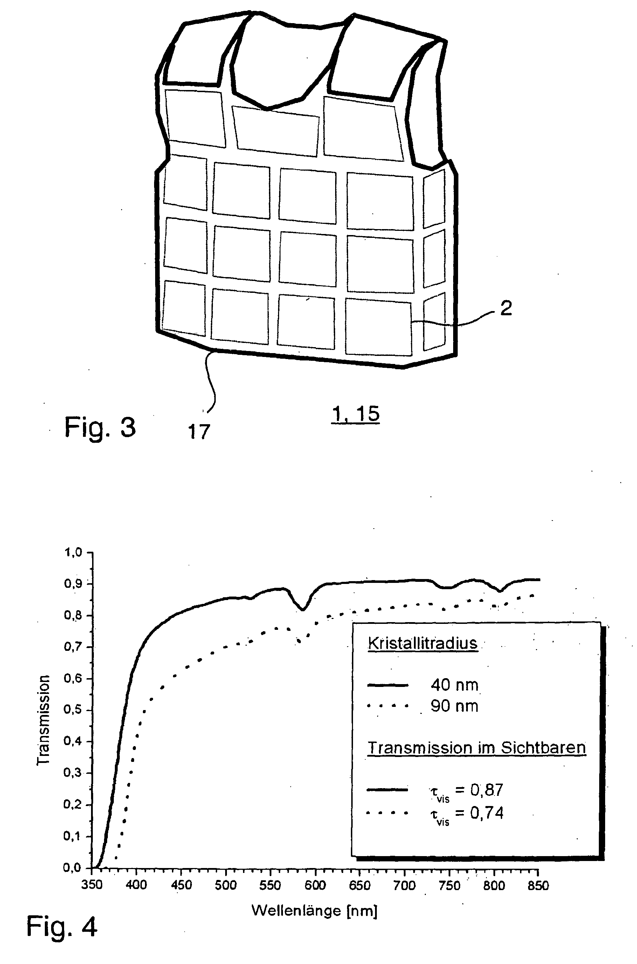

In Fig. 3 ist ein Beispiel einer Panzerung 1 in Form einer kugelsicheren Weste 15 dargestellt. Das Textilmaterial 17 der Weste 35 dient als Träger für Platten 2 des Glaskeramikmaterials, die beispielsweise zwischen zwei Textillagen eingenäht sein können. Die nicht von außen sichtbaren, eingenähten Platten des Glaskeramikmaterials sind in Fig. 3 als gestrichelte Linien dargestellt. Als textiles Trägermaterial kommt beispielsweise wieder AramidGewebe oder uHDPE-Gewebe (ultrahochdichtes Polyethylen) in Betracht. Die Platten können auch insbesondere in Form eines Laminats mit einem faserverstärkten Kunststoff oder einer Kunststoffplatte, wie bei den in den Fig. 1 und 2 gezeigten Beispielen in der Weste eingesetzt werden.

Fig. 4 zeigt ein Diagramm der spektralen Transmission als Funktion der Wellenlänge für zwei erfindungsgemäße Keatit-Glaskeramiken mit unterschiedlichen Kristallitgrössen. Die mittleren Kristallitradien der Glaskeramiken betragen 40 Nanometer im einen Beispiel und 90 Nanometer im zweiten Beispiel. Bei beiden Beispielen handelt es sich um das gleiche Grundmaterial, bei welchem durch unterschiedliche Prozessparameter bei der Keramisierung die unterschiedlichen mittleren Kristallitradien der Keatit-Mischkristalle erzeugt wurden.

Anhand der beiden spektralen Transmissionsverläufe zu erkennen, daß die Transmission mit steigendem Kristallitradius aufgrund der Streuung abnimmt. Aus den Kurven wurde auch die Transmission im Sichtbaren $\tau_{vis}$ für die beiden Glaskeramiken bestimmt. Diese beträgt bei der Glaskeramik mit mittlerem Kristallitradius von 90 Nanometern 0,74 und für die Glaskeramik mit mittlerem Kristallitradius von 40 Nanometern bereits 0,87. Die Transmission im Sicht-

baren $\tau_{vis}$ kann bestimmt werden, indem die spektrale Transmission im Bereich von 380 bis 780 Nanometern in Abständen von 5 Nanometern bestimmt, mit der Augenempfindlichkeit gefaltet und aufsummiert wird.

Ohne Beschränkung auf die vorstehenden Beispiele kann gemäß einer Weiterbildung einer erfindungsgemäßen Glaskeramik diese auch so charakterisiert werden, daß der mittlere Kristallitradius der Keatit-Mischkristalle höchstens 100 Nanometer und die Transmission im Sichtbaren zumindest 0,7 beträgt und/oder der mittlere Kristallitradius der Keatit-Mischkristalle höchstens 50 Nanometer und die Transmission im Sichtbaren zumindest 0,8 beträgt.

Es ist dem Fachmann ersichtlich, daß die Erfindung nicht auf die vorstehend beschrieben beispielhaften Ausführungsformen beschränkt ist, sondern in vielfältiger Weise variiert werden kann. Insbesondere können die Merkmale der einzelnen Ausführungsbeispiele auch miteinander kombiniert werden.

**Patentansprüche**

1.  Antiballistische Panzerung, umfassend eine Glaskeramik-Komponente, wobei die Glaskeramik-Komponente folgende Bestandteile enthält: 50 bis 70 Gewichtsprozent $SiO_2$,

    15 bis 25 Gewichtsprozent $Al_2O_3$,
    0,5 bis 5 $ZrO_2$,
    0,1 bis 10 Gewichtsprozent $Li_2O$,
    1 bis 5 Gewichtsprozent $TiO_2$,
    wobei die Hauptkristallphase der Glaskeramik Keatit-Mischkristall im Zusammensetzungsbereich $LiAlSi_2O_6$ - $LiAlSi_4O_{10}$ enthält.

2.  Antiballistische Panzerung gemäß dem vorstehenden Anspruch, **dadurch gekennzeichnet, daß** die Glaskeramik Keatit-Mischkristall zu einem Anteil von 60 bis 98 Volumenprozent enthält.

3.  Antiballistische Panzerung gemäß einem der beiden vorstehenden Ansprüche, **dadurch gekennzeichnet, daß** die Glaskeramik eine oder mehrere der Komponenten BaO, CaO, $K_2O$, MgO, $Na_2O$, $P_2O_5$, $SnO_2$, $As_2O_3$, $Sb_2O_3$, $V_2O_5$, CoO, NiO, $Fe_2O_3$, jeweils zwischen 0 und 5 Gewichtsprozent enthält.

4.  Antiballistische Panzerung gemäß einem der vorstehenden Ansprüche, **dadurch gekennzeichnet, daß** die mittlere Kristallit-Größe in der Glaskeramik weniger als 0,2, vorzugsweise weniger als 0,1 Mikrometer beträgt.

5.  Antiballistische Panzerung gemäß einem der vorstehenden Ansprüche, **dadurch gekennzeichnet, daß** die Kristallite der Glaskeramik einen mittleren Kristallitradius a kleiner 30 nm und einem Brechwertunterschied $\Delta n$ zur Restglasphase von $\Delta n < 0,3$ aufweisen.

6.  Antiballistische Panzerung, gemäß einem der vorstehenden Ansprüche, **dadurch gekennzeichnet, daß** der mittlere Kristallitradius der Keatit-Mischkristalle höchstens 100 Nanometer und die Transmission im Sichtbaren zumindest 0,7 beträgt, vorzugsweise, daß der mittlere Kristallitradius der Keatit-Mischkristalle höchstens 50 Nanometer und die Transmission im Sichtbaren zumindest 0,8 beträgt.

7.  Antiballistische Panzerung gemäß einem der vorstehenden Ansprüche, ausgestaltet als tragbare Personenschutz-Einrichtung, Verglasung, Visier oder Sichtscheibe.

8.  Antiballistische Panzerung gemäß einem der vorstehenden Ansprüche, **gekennzeichnet durch** einen Verbund der Glaskeramik-Komponente mit einem weiteren, weicheren Panzerelement, wobei die Glaskeramik-Komponente in Einwirkungsrichtung vor dem weiteren Panzerelement angeordnet ist.

9.  Verfahren zur Herstellung einer antiballistischen Panzerung mit einer Glaskeramik-Komponente, bei welchem ein Ausgangsglas für die Glaskeramik-Komponente bereitgestellt wird, welches 50 bis 70 Gewichtsprozent $SiO_2$,

    15 bis 25 Gewichtsprozent $Al_2O_3$,
    0,5 bis 5 $ZrO_2$,
    0,1 bis 10 Gewichtsprozent $Li_2O$,
    1 bis 5 Gewichtsprozent $TiO_2$ enthält, und wobei das
    Ausgangsglas einer Temperaturbehandlung bei Temperaturen über der Temperatur der maximalen Ausscheidungsgeschwindigkeit des Hochquarzmischkristalles unterzogen wird, wobei Keatit-Mischkristall im Zusam-

mensetzungsbereich $LiAlSi_2O_6$ - $LiAlSi_4O_{10}$ ausgeschieden wird.

10. Verfahren gemäß dem vorstehenden Anspruch, **dadurch gekennzeichnet, daß** die Keatit-Mischkistallphase mit einem Anteil zwischen 60 und 98 Volumenprozent ausgeschieden wird.

11. Verfahren gemäß einem der vorstehenden Ansprüche, **dadurch gekennzeichnet, daß** ein Ausgangsglas verwendet wird, welches eine oder mehrere der Komponenten BaO, CaO, $K_2O$, MgO, $Na_2O$, $P_2O_5$, $SnO_2$, $As_2O_3$, $Sb_2O_3$, $V_2O_5$, CoO, NiO, $Fe_2O_3$, jeweils zwischen 0 und 5 Gewichtsprozent enthält.

12. Verfahren gemäß einem der vorstehenden Ansprüche, **dadurch gekennzeichnet, daß** die mittlere Kristallit-Größe durch Variation des Temperatur-Zeit-Regimes während der Keramisierung auf weniger als 0,2 Mikrometer, vorzugsweise weniger als 0,1 Mikrometer begrenzt wird.

13. Verfahren gemäß einem der vorstehenden Ansprüche, **dadurch gekennzeichnet, daß** die Zusammensetzung des Ausgangsglases so gewählt wird, dass der Brechungsindex der Restglasphase nur um weniger als $\pm 0,3$ von dem Brechungsindex der Kristallphase abweicht.

14. Verfahren gemäß einem der vorstehenden Ansprüche, **dadurch gekennzeichnet, daß** das Ausgangsglas so gewählt und die Temperatur bei der Keramisierung so geführt wird, daß die Kristallite einen mittleren Kristallitradius a kleiner 100 nm und einen Brechwertunterschied $\Delta n$ zur Restglasphase von $\Delta n < 0,1$ aufweisen.

15. Verfahren gemäß einem der vorstehenden Ansprüche, **dadurch gekennzeichnet, daß** ein Verbund mit einem faserverstärkten Polymer und/oder einer transparenten Kunststoffplatte oder -folie hergestellt wird.

**Claims**

1. An antiballistic armor, comprising a glass ceramic component, wherein the glass ceramic component comprises the following components:

   50 to 70 percent by weight of $SiO_2$,
   15 to 25 percent by weight of $Al_2O_3$,
   0.5 to 5 of $ZrO_2$,
   0.1 to 10 percent by weight of $Li_2O$,
   1 to 5 percent by weight of $TiO_2$;
   wherein the main crystalline phase of the glass ceramic contains keatite mixed crystal in a composition range from $LiAlSi_2O_6$ to $LiAlSi_4O_{10}$.

2. The antiballistic armor according to the preceding claim, **characterized in that** the glass ceramic contains keatite mixed crystal in an amount from 60 to 98 volume percent.

3. The antiballistic armor according to any of the two preceding claims, **characterized in that** the glass ceramic contains one or more of the components BaO, CaO, $K_2O$, MgO, $Na_2O$, $P_2O_5$, $SnO_2$, $As_2O_3$, $Sb_2O_3$, $V_2O_5$, CoO, NiO, $Fe_2O_3$, from 0 to 5 percent by weight in each case.

4. The antiballistic armor according to any of the preceding claims, **characterized in that** the average crystallite size in the glass ceramic is less than 0.2, preferably less than 0.1 micrometers.

5. The antiballistic armor according to any of the preceding claims, **characterized in that** the crystallites of the glass ceramic have an average crystallite radius a of less than 30 nm and a refractive index difference $\Delta n$ with respect to the residual glass phase of $\Delta n < 0.3$.

6. The antiballistic armor according to any of the preceding claims, **characterized in that** the average crystallite radius of the keatite mixed crystals is not more than 100 nanometers and that the transmittance in the visible range is at least 0.7, preferably **in that** the average crystallite radius of the keatite mixed crystals is not more than 50 nanometers and that the transmittance in the visible range is at least 0.8.

7. The antiballistic armor according to any of the preceding claims, which is configured as a portable personal protection equipment, glazing, visor, or viewing window.

8. The antiballistic armor according to any of the preceding claims, **characterized by** a composite of the glass ceramic component with a further, softer armoring element, wherein the glass ceramic component is arranged in front of the further armoring element as seen in the direction of impact.

9. A method for producing an antiballistic armor including a glass ceramic component, wherein a starting glass for the glass ceramic component is provided, which contains 50 to 70 percent by weight of $SiO_2$,

15 to 25 percent by weight of $Al_2O_3$,
0.5 to 5 of $ZrO_2$,
0.1 to 10 percent by weight of $Li_2O$,
1 to 5 percent by weight of $TiO_2$; and wherein the starting glass is subjected to a heat treatment at temperatures above the temperature of a maximum rate of precipitation of the high quartz mixed crystal, whereby keatite mixed crystal is formed in a composition range from $LiAlSi_2O_6$ to $LiAlSi_4O_{10}$.

10. The method according to the preceding claim, **characterized in that** the keatite mixed crystal phase is precipitated in a proportion from 60 to 98 volume percent.

11. The method according to any of the preceding claims, **characterized in that** a starting glass is used which contains one or more of the components BaO, CaO, $K_2O$, MgO, $Na_2O$, $P_2O_5$, $SnO_2$, $As_2O_3$, $Sb_2O_3$, $V_2O_5$, CoO, NiO, $Fe_2O_3$, from 0 to 5 percent by weight in each case.

12. The method according to any of the preceding claims, **characterized in that** the average crystallite size is limited to less than 0.2 micrometers, preferably less than 0.1 micrometers, by varying the temperature-time regime during ceramization.

13. The method according to any of the preceding claims, **characterized in that** the composition of the starting glass is chosen so that the refractive index of the residual glass phase differs from the refractive index of the crystal phase by less than $\pm 0.3$.

14. The method according to any of the preceding claims, **characterized in that** the starting glass is selected and the temperature during ceramization is controlled so that the crystallites have an average crystallite radius a of less than 100 nm and a refractive index difference $\Delta n$ with respect to the residual glass phase of $\Delta n < 0.1$.

15. The method according to any of the preceding claims, **characterized in that** a composite with a fiber-reinforced polymer and/or a transparent plastic sheet or film is produced.

**Revendications**

1. Blindage antibalistique, comprenant un composant vitrocéramique, dans lequel le composant vitrocéramique contient les ingrédients suivants :

50 à 70 % en poids de $SiO_2$,
15 à 25 % en poids de $Al_2O_3$,
0,5 à 5 % en poids de $ZrO_2$,
0,1 à 10 % en poids de $LiO_2$,
1 à 5 % en poids de $TiO_2$,
dans lequel la phase de cristal principale de la vitrocéramique contient un cristal mixte de kéatite dans la plage de composition $LiAlSi_2O_6$ - $LiAlSi_4O_{10}$.

2. Blindage antibalistique selon la revendication précédente, **caractérisé en ce que** la vitrocéramique contient un cristal mixte de kéatite en une proportion de 60 à 98 % en volume.

3. Blindage antibalistique selon une des deux revendications précédentes, **caractérisé en ce que** la vitrocéramique contient un ou plusieurs des composants BaO, CaO, $K_2O$, MgO, $Na_2O$, $P_2O_5$, $SnO_2$, $As_2O_3$, $Sb_2O_3$, $V_2O_5$, CoO, NiO, $Fe_2O_3$, respectivement entre 0 et 5 % en poids.

**4.** Blindage antibalistique selon une des revendications précédentes, **caractérisé en ce que** la taille moyenne des cristallites dans la vitrocéramique est inférieure à 0,2, de préférence inférieure à 0,1 micromètre.

**5.** Blindage antibalistique selon une des revendications précédentes, **caractérisé en ce que** les cristallites de la vitrocéramique présentent un rayon moyen des cristallites a inférieur à 30 nm et une différence d'indice de réfraction $\Delta n$ par rapport à la phase vitreuse restante de $\Delta n < 0,3$.

**6.** Blindage antibalistique selon une des revendications précédentes, **caractérisé en ce que** le rayon moyen des cristallites des cristaux mixtes de kéatite est au maximum de 100 nanomètres et la transmission dans le visible est d'au moins 0,7, de préférence **en ce que** le rayon moyen des cristallites des cristaux mixtes de kéatite est au maximum de 50 nanomètres et la transmission dans le visible est d'au moins 0,8.

**7.** Blindage antibalistique selon une des revendications précédentes, configuré sous la forme d'un équipement de protection individuelle portable, d'un vitrage, d'une visière ou d'un hublot.

**8.** Blindage antibalistique selon une des revendications précédentes, **caractérisé par** une liaison des composants vitrocéramiques avec un autre élément de blindage plus mou, dans lequel le composant vitrocéramique est disposé avant l'autre élément de blindage dans le sens de l'action de la force.

**9.** Procédé de fabrication d'un blindage antibalistique avec un composant vitrocéramique, dans lequel un verre de départ pour le composant vitrocéramique est préparé, lequel comprend :

50 à 70 % en poids de $SiO_2$,
15 à 25 % en poids de $Al_2O_3$,
0,5 à 5 % en poids de $ZrO_2$,
0,1 à 10 % en poids de $LiO_2$,
1 à 5 % en poids de $TiO_2$,
et dans lequel le verre de départ est soumis à un traitement thermique à des températures supérieures à la température de la vitesse de précipitation maximale du cristal mixte hautement quartzique, le cristal mixte de kéatite dans la plage de composition $LiAlSi_2O_6$ - $LiAlSi_4O_{10}$ étant précipité.

**10.** Procédé selon la revendication précédente, **caractérisé en ce que** la phase de cristal mixte de kéatite est précipitée avec une proportion située entre 60 et 98 % en volume.

**11.** Procédé selon une des revendications précédentes, **caractérisé en ce qu'**un verre de départ qui comprend un ou plusieurs des composants $BaO$, $CaO$, $K_2O$, $MgO$, $Na_2O$, $P_2O_5$, $SnO_2$, $As_2O_3$, $Sb_2O_3$, $V_2O_5$, $CoO$, $NiO$, $Fe_2O_3$, respectivement entre 0 et 5 % en poids, est utilisé.

**12.** Procédé selon une des revendications précédentes, **caractérisé en ce que** la taille moyenne des cristallites est limitée à moins de 0,2 micromètre, de préférence moins de 0,1 micromètre, par la variation du régime température - temps pendant la céramisation.

**13.** Procédé selon une des revendications précédentes, **caractérisé en ce que** la composition du verre de départ est choisie de manière que l'indice de réfraction de la phase vitreuse restante diverge seulement d'un peu moins de $\pm$ 0,3 de l'indice de réfraction de la phase de cristal.

**14.** Procédé selon une des revendications précédentes, **caractérisé en ce que** le verre de départ est choisi et la température lors de la céramisation est gérée de sorte que les cristallites présentent un rayon moyen de cristallite a inférieur à 100 nm et une différence d'indice de réfraction $\Delta n$ par rapport à la phase vitreuse restante de $\Delta n < 0,1$.

**15.** Procédé selon une des revendications précédentes, **caractérisé en ce qu'**un composite avec un polymère renforcé de fibres et/ou une plaque ou feuille de plastique transparente est fabriqué.

Fig. 1

21

2

1

22

4

Fig. 2

2

21

1, 10

5

22

**Fig. 3**    17    <u>1, 15</u>

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4473653 A
- US 5763813 A
- EP 0390773 B1

- DE 3426457
- US 6389594 B
- GB 2284655 A